# EUROPÄISCHE PATENTSCHRIFT

(11) **EP 3 003 707 B1**
(45) Veröffentlichungstag und Bekanntmachung des Hinweises auf die Patenterteilung: **30.12.2020**
(21) Anmeldenummer: 14726082.2
(22) Anmeldetag: 20.05.2014
(51) Int. Cl.: B32B 5/26, E04F 13/077

(54) **AKUSTIKMODUL**
ACOUSTIC MODULE
MODULE ACOUSTIQUE

(30) Priorität: 06.06.2013 DE 102013009565
(43) Veröffentlichungstag der Anmeldung: 13.04.2016
(73) Patentinhaber: BWF Tec GmbH & Co. KG, 89362 Offingen (DE)
(72) Erfinder: SCHMID, Wolfgang, 89312 Günzburg (DE)
(74) Vertreter: Bosch Jehle Patentanwaltsgesellschaft mbH
(86) Internationale Anmeldenummer: PCT/EP2014/001364
(87) Internationale Veröffentlichungsnummer: WO 2014/194985

(56) Entgegenhaltungen:
- EP-A1- 2 239 164
- DE-U1-202012 001 857
- US-A1- 2007 194 592
- US-A1- 2010 006 372

## Beschreibung

Die Erfindung betrifft ein Schichtsystem, das für ein Akustikmodul eingesetzt werden kann, sowie ein Verfahren zu dessen Herstellung und dessen Verwendung.

Es ist bekannt, dass eine unbefriedigende Raumakustik bei der Gestaltung von Objekt-, Bürou. Wohnräumen mit schallharten Materialien, wie Beton und Holz entsteht. Schallharte Räume in modernen Gebäuden, offene Großräume und ein weit verbreiteter Einsatz von Bürotechnik tragen dazu bei, dass die Sensibilität gegenüber Lärm und Geräuschen ständig steigt.

Auf der anderen Seite hat ein angenehmes akustisches Umfeld nachweislich positive Auswirkungen auf das persönliche Wohlbefinden und damit auch auf die Produktivität in Räumen, in denen Menschen viele Stunden täglich leben und arbeiten.

Aus DE 20 2012 001857 U1 ist ein Schallabsorber zur Anordnung in Räumen eines Gebäudes bekannt, der eine in einem Rahmen angeordnete massive, schwingfähige Platte umfasst, wobei zumindest zu einer Seite der Platte eine Absorptionsschicht aus einem Naturprodukt angeordnet ist.

Der vorliegenden Erfindung liegt die Aufgabe zugrunde, ein System bereit zu stellen, mit dem in einfacher und ästhetischer Weise und kostengünstig die Raumakustik vor allem nachträglich verbessert werden kann.

Erfindungsgemäß wird dies durch ein Schichtsystem zum Einsatz in einem Akustikmodul erreicht, das umfasst:
(a) ein Vliesmaterial und
(b) eine Filzschicht aus Wollfilz, die zumindest teilweise auf das Vliesmaterial aufgebracht und in einem Randbereich damit verbunden ist,
wobei das Verbinden durch Schweißen derart erfolgt ist, dass das Schichtsystem dreidimensional verrundete Materialkanten aufweist.

Unter einem Akustikmodul wird eine Platte verstanden, in der das erfindungsgemäße Schichtsystem in einen Rahmen montiert ist. Mit solchen Akustikmodulen kann eine Verbesserung der Raumakustik erreicht werden. Sie werden dazu in den Räumen angebracht, beispielsweise an den Wänden, der Decke oder auch als Raumteiler. Dabei kann das Akustikmodul so angebracht werden, dass der Betrachter die Filzschicht als äußere Schicht wahrnimmt.

Unter einem Vlies oder Vliesstoff werden aus Fasern hergestellte und mechanisch, chemisch oder thermisch verfestigte textile Flächengebilde verstanden, die häufig auch als Nonwoven bezeichnet werden. Als Rohstoffe können natürliche und synthetische Fasern eingesetzt werden, auch der Einsatz von natürlichen oder synthetischen Bindemitteln ist möglich. Die Länge der Fasern kann sehr breit variieren, je nach Herstellungsverfahren von wenigen mm bis zu endlosen Filamenten.

Vorzugsweise umfasst das Vliesmaterial ein Akustikvlies. Unter einem Akustikvlies wird eine dünne Vlieslage z. B. auf Textilfaser- oder Glasfaserbasis verstanden. Es zählt zur Klasse der porösen Absorber, da die Schallenergie durch Abbremsen der Luftteilchen (Reibung) absorbiert wird.

Kenndaten für Akustikvliese sind unter anderem der Schallabsorptionsgrad, das Brennverhalten, die Dicke des Materials und das Flächengewicht. Dadurch kann für den jeweiligen Einsatzbereich das richtige Akustikvlies mit den gewünschten Eigenschaften ausgewählt werden.

Für das erfindungsgemäße Schichtsystem können die an sich bekannten Akustikvliese verwendet werden.

Als Faserrohstoffe für das Vliesmaterial, insbesondere das Akustikvlies, können Polyester, Bikomponenten-Polyester, Polyamide, Polylactide oder auch Polypropylen und deren Mischungen eingesetzt werden.

Günstiger Weise wird als Akustikvlies ein stoßfestes, formstabiles und besonders gut absorbierendes Akustikvlies eingesetzt. Solche formstabilen Akustikvliese sind leicht zu konfektionieren, beispielsweise durch Schneiden, Fräsen, Sägen oder Prägen, und in bevorzugten Dicken von 5 - 18 mm handelsüblich verfügbar. Die Oberfläche dieser Akustikvliese ist im Vergleich zu Akustikschäumen druckunempfindlich, direkt bedruckbar und kann auf vielfältige Weise oberflächenbehandelt werden.

Bevorzugte Eigenschaften der vorstehenden formstabilen Akustikvliese sind:
- gute Schallabsorption,
- geringes spezifisches Gewicht,
- schwer entflammbar gemäß DIN 4102 (B1),
- 100% Polyester, recycelbar,
- formstabil, selbsttragend, und
- vielfältig konfektionierbar.

Im erfindungsgemäßen Schichtsystem ist das Material der Filzschicht Wolle, insbesondere Merinowolle.

Unter Filz wird ein textiles Flächengebilde aus einem ungeordneten, nur schwer zu trennenden Fasergut verstanden. Es handelt sich bei Filz also um eine nicht gewebte Textilie. Aus Chemiefasern (Synthetikfasern) und auch aus Pflanzenfasern entstehen Filze durch trockene Vernadelung oder durch Verfestigung mit unter hohem Druck aus einem Düsenbalken austretenden Wasserstrahlen. Filz aus Wolle (Wollfilz) oder auch geeigneten wollhaltigen Fasermischungen ist ein Walk- oder Pressfilz. Die gereinigte gekämmte und bis zum Vlies aufbereitete und eventuell gefärbte Rohwolle oder Fasern werden durch eine meist mechanische Bearbeitung (Filzen und Walken) in einen festen Zusammenhalt gebracht. Die einzelnen Fasern sind dabei miteinander ungeordnet verschlungen. Tierische Haare haben eine schuppenförmige Oberfläche, deren mikroskopisch kleine Plättchen sich beim Filzen dauerhaft ineinander verhaken.

Im erfindungsgemäßen Schichtsystem sind die beiden Schichten, d.h. das Vliesmaterial (a) und die Filzschicht (b) miteinander verbunden, insbesondere im Randbereich.

Dieses Verbinden erfolgt durch Schweißen. Unter Schweißen versteht man (gemäß EN 14610 und DIN 1910-100) das unlösbare Verbinden von Bauteilen unter Anwendung von Wärme oder Druck, mit oder ohne Schweißzusatzwerkstoffen. Von allen Verfahren ist das Schmelzschweißen das bekannteste, wobei die zu verbindenden Werkstoffe bis zu deren Verflüssigung erhitzt werden und sich vermischen, so dass sie nach dem Erstarren fest miteinander verbunden sind.

Vorzugsweise kann dieses Schweißen durch HF-Schweißen erfolgen. HF-Schweißen ist die Kurzbezeichnung für Hochfrequenzschweißen, bei dem die Reibung der Moleküle gegeneinander eine entscheidende Rolle spielt. Beim Hochfrequenzschweißen handelt es sich um ein Druckschweißverfahren. Beim HF-Schweißen entsteht die benötigte Schweißwärme durch Molekularschwingungen in einem Hochfrequenzfeld direkt am Material, also durch die Wärme, die durch das Reiben der Moleküle an- und gegeneinander entsteht. Diese Erwärmung führt dazu, dass die zu verbindenden Werkstoffe mit thermoplastischen Eigenschaften zunächst erweichen oder sich verflüssigen und anschließend zusammengepresst werden können. Durch den Druck entsteht die Schweißverbindung, wobei bei der Anleitung es günstig ist, dass die Werkstoffe solange zusammengepresst bleiben, bis sie erkaltet sind. Durch das Hochfrequenzschweißen können alle polaren Materialien verbunden werden, deren Moleküle durch Reibung aktiviert werden, beispielsweise Hart- und Weich- PVC, Polyamid, Polyester, Polyurethan oder Verbundmaterialien. Es können auch Anteile nicht thermoplastischer Materialien verschweißt werden, wenn eine ausreichende Eindringtiefe des geschmolzenen Materials in die nicht schmelzenden Anteile, z.B. aus Wolle oder Viskose, erzielt wird. Reicht der Prozentsatz der durch Hochfrequenz aktivierbaren Stoffe nicht aus oder sollen durch das HF-Schweißen Materialien verbunden werden, deren Moleküle durch Reibung nicht aktiviert werden können, etwa Textilien, können diese mittels Schweißhilfsfolien oder mit HF-aktivierbaren Klebstoffschichten verbunden werden.

Das Schichtsystem kann in an sich bekannter Weise in einen Rahmen montiert werden, beispielsweise durch Einklemmen in die Profilnut.

Die Erfindung betrifft ferner ein Verfahren zur Herstellung eines Schichtsystems zum Einsatz für ein Akustikmodul, wobei (a) ein Vliesmaterial auf zumindest einem Teil einer Filzschicht aus Wollfilz (b) aufgebracht und in einem Randbereich damit verbunden wird. Dabei können das Vliesmaterial (a) und die Filzschicht (b) wie vorstehend beschrieben definiert sein.

Erfindungsgemäß erfolgt das Verbinden durch Schweißen derart, dass das Schichtsystem dreidimensional verrundete Materialkanten aufweist. Vorzugsweise erfolgt das Verbinden durch Hochfrequenzschweißen, wie es vorstehend ausführlich beschrieben wurde, so dass darauf verwiesen wird. Das Hochfrequenzschweißen ermöglicht die Aufbringung einer fest fixierten dreidimensionalen Prägung, z.B. von Logos oder Grafiken.

Ferner betrifft die vorliegende Erfindung die Verwendung des vorstehend beschriebenen Schichtsystems in Akustikmodulen.

Die Erfindung wird anhand der folgenden Figuren näher beschrieben, die aber nur zur Veranschaulichung der Erfindung dienen und nicht einschränkend auszulegen sind.
Figur 1 zeigt schematisch ein erfindungsgemäßes Schichtsystem.
Figur 2 zeigt exemplarisch einen Rahmen, in den das erfindungsgemäße Schichtsystem montiert werden kann.

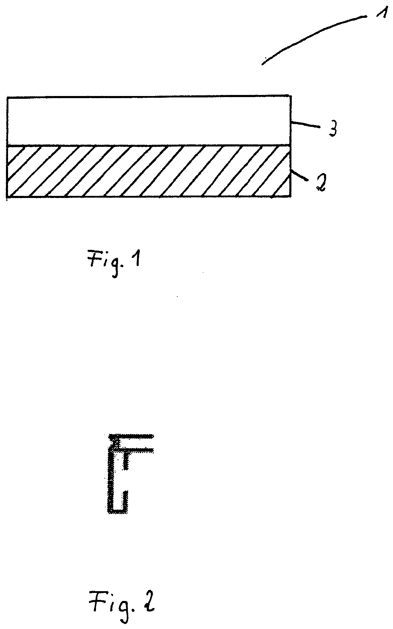

Wie Figur 1 entnommen werden kann, weist das erfindungsgemäße Schichtsystem 1 eine Schicht mit einem Vliesmaterial 2 und eine Filzschicht 3 auf, wobei die Filzschicht 3 zumindest auf einem Teil des Vliesmaterials 2 aufgebracht und damit verbunden ist, beispielsweise durch Schweißen, ganz besonders bevorzugt durch Hochfrequenzschweißen.

Das erfindungsgemäße Schichtsystem kann für ein Akustikmodul zur Verbesserung der Raumakustik verwendet werden. Dabei kann die Montage des Akustikmoduls so erfolgen, dass die Filzschicht in den Raum weist, was bereits vorstehend näher erläutert wurde.

Die das erfindungsgemäße Schichtsystem aufweisenden Akustikmodule kombinieren akustischen Komfort mit zeitlosem Design. Dies kann dadurch erreicht werden, dass ein Filz eingesetzt wird, der ästhetisch gestaltet ist, beispielsweise durch farbige Gestaltung und/oder durch grafische Gestaltungen. Sie verleihen Arbeitsräumen eine akustische Verbesserung und erzeugen eine visuell ansprechende Gestaltung.

Im erfindungsgemäßen Schichtsystem können das Vliesmaterial (a) und die Filzschicht (b) durch Hochfrequenzschweißen wie vorstehend beschrieben verbunden sein. Günstiger Weise liegt dazu in einer der beiden Schichten (a) oder (b) eine thermoplastische Komponente vor, sofern sie nicht bereits im Material der Schicht selbst vorhanden ist, kann sie zugesetzt oder als zusätzliche Schicht vorgesehen sein. Ferner hat es sich als günstig erwiesen, dass das Schweißen rundum erfolgt.

Wie vorstehend beschrieben wurde, kann im erfindungsgemäßen Schichtsystem ein hochwirksames, stoßfestes und formstabiles Akustikvlies mit hochwertigem Wollfilz hochfrequenzverschweißt sein und ggf. durch einen Rahmen, z.B. einen Aluminium-, Holz- oder Kunststoffrahmen verstärkt und geschützt sein. Das erfindungsgemäße Schichtsystem kann beispielsweise durch Klammern im Rahmen montiert sein. Unauffällige in die Rückwand integrierte Löcher ermöglichen eine einfache Aufhängung und Fixierung des Moduls.

Die Akustikmodule können z.B. 5 cm dick sein. Ferner können die Akustikmodule aufgrund der Bauweise und der verwendeten Materialien ein geringes Gewicht aufweisen.

Durch die Verwendung der Filzschicht, insbesondere aus hochwertigem Merino-Wollfilz kann eine optisch ansprechende Oberfläche des erfindungsgemäßen Schichtsystems und somit des Akustikmoduls erreicht werden, wobei die Filzschicht die nach außen sichtbare Oberfläche darstellt. Vorzugsweise kann die Filzschicht den Akustikkern (d.h. das Vliesmaterial) umschließen und ferner vorzugsweise rundum, insbesondere im Randbereich, verschweißt sein.

Weiterhin haben sich die Möglichkeiten der nahtlosen Verarbeitung, der umlaufenden textilen Kanten und die dreidimensional verrundeten Materialkanten als günstig erwiesen.

Die Maße und Gewichte des erfindungsgemäßen Schichtsystems bzw. des Akustikmoduls können in Abhängigkeit vom Verwendungszweck üblicherweise bis zu 1800 mm x 800 mm ausgestaltet werden. Dabei haben sich die folgenden Maße als besonders günstig erwiesen: Dicke: ca. 5cm

| | |
|---|---|
| 60cm x60cm | ca. 3kg |
| 120cm x 60cm | ca. 6kg |
| 180cm x 60cm | ca. 9kg |

Die Figur 2 zeigt ein Beispiel eines Rahmens, der als Aluminiumprofil ausgestaltet sein kann, in den das erfindungsgemäße Schichtsystem montiert sein kann. Die Höhe kann ca. 6mm - 20mm betragen. Er kann in den Ecken auf Gehrung geschnitten und mit Winkelverbindern zu einem Rahmen montiert sein.

Wie bereits vorstehend ausgeführt wurde, kann die Filzschicht des erfindungsgemäßen Schichtsystems die Oberfläche, d.h. die dem Raum zugewandte Fläche des Akustikmoduls darstellen. Diese die Oberfläche bildende Filzschicht kann folgende Eigenschaften aufweisen, wobei ausdrücklich daraufhingewiesen wird, dass es nicht zwingend ist, dass die Filzschicht alle der folgenden Eigenschaften zusammen aufweist.
- Sichtseite des Moduls vorzugsweise aus Wollfilz (z.B. 2 mm stark, Dichte 0.30 g/cm³), gefärbt, bedruckt, geprägt, meliert durch Färbung einer Fasermischung, bemalt, mehrfarbig mittels Stumpfnaht
- Grund für die Anwendung von Wolle: Akustik, Schadstoffsorption, Klimawirkung, Optik und Haptik sind gegenüber synthetischen Materialien wesentlich angenehmer, was zu einer Steigerung des Wohlfühlwertes führt
- Dicke: 1 mm - 2 mm
- Gewicht: 200g/m² - 600g/m²
- Materialdichte: 0,18 - 0,3g/cm³
- Material: 100% Merinowolle, Mischung aus 30-70% Wolle / Rest Zellwolle
- Ein- und mehrfarbige Designs
- Ausrüstungen zur Erreichung von Flammschutz, härterem Warengriff, höherer Biegefestigkeit, Schmutzabweisung, Wasser-/Ölabweisung, antibakterieller Wirkung, Mottenbeständigkeit oder Verrottungshemmung

Die Front des Akustikmoduls ist günstiger Weise stoßfest und pinnbar.

Das Vlies kann in einer Lage oder in mehreren Lagen, beispielsweise 2 oder 3 Lagen eingesetzt werden. Die Höhe kann somit 15mm, 30mm oder 45mm betragen.

## Patentansprüche

1. Schichtsystem zum Einsatz in einem Akustikmodul, umfassend:
(a) ein Vliesmaterial und
(b) eine Filzschicht aus Wollfilz, die zumindest teilweise auf das Vliesmaterial aufgebracht und in einem Randbereich damit verbunden ist,
wobei das Verbinden durch Schweißen derart erfolgt ist, dass das Schichtsystem dreidimensional verrundete Materialkanten aufweist.

2. Schichtsystem nach Anspruch 1, wobei das Vliesmaterial ein Akustikvlies umfasst.

3. Schichtsystem nach Anspruch 2, wobei das Akustikvlies ein stoßfestes und formstabiles Akustikvlies umfasst.

4. Schichtsystem nach einem der vorhergehenden Ansprüche, wobei das Schweißen durch Hochfrequenzschweißen erfolgt ist.

5. Schichtsystem nach einem der vorhergehenden Ansprüche, wobei es in einem Rahmen montiert ist.

6. Schichtsystem nach einem der vorhergehenden Ansprüche, wobei eine der Schichten (a) oder (b) mit mindestens einer Ausrüstung zur Erreichung von Flammschutz, härterem Warengriff, höherer Biegefestigkeit, Schmutzabweisung, Wasser-/Ölabweisung, antibakterieller Wirkung, Mottenbeständigkeit oder Verrottungshemmung versehen ist.

7. Verfahren zur Herstellung eines Schichtsystems zum Einsatz als Akustikmodul, wobei (a) ein Vliesmaterial auf zumindest einem Teil einer Filzschicht aus Wollfilz (b) aufgebracht und in einem Randbereich damit verbunden wird, wobei das Verbinden durch Schweißen derart erfolgt, dass das Schichtsystem dreidimensional verrundete Materialkanten aufweist.

8. Verfahren nach Anspruch 7, wobei das Vliesmaterial und die Filzschicht wie in einem der Ansprüche 2 bis 3 definiert sind.

9. Verfahren nach einem der Ansprüche 7 oder 8, wobei das Schweißen ein Hochfrequenzschweißen ist.

10. Verfahren nach einem der Ansprüche 7 bis 9, wobei das Schichtsystem in einen Rahmen montiert wird.

11. Verwendung des Schichtsystems nach einem der Ansprüche 1 bis 6 als Akustikmodul.

## Claims

1. A layer system for use in an acoustic module, comprising:
(a) a fleece material, and
(b) a felt layer of wool felt which is applied at least partially on the fleece material and connected therewith in an edge region,
wherein connecting is performed by welding such that the layer system comprises three-dimensionally rounded material edges.

2. The layer system according to claim 1, wherein the fleece material comprises an acoustic fleece.

3. The layer system according to claim 2, wherein the acoustic fleece comprises a shock-proof and dimensionally stable acoustic fleece.

4. The layer system according to any of the preceding claims, wherein welding is performed by high frequency welding.

5. The layer system according to any of the preceding claims, wherein it is mounted in a frame.

6. The layer system according to any of the preceding claims, wherein one of the layers (a) or (b) is provided with at least one equipment for achieving flame protection, harder product grip, higher bending strength, stain resistance, water resistance/oil resistance, antibacterial effect, moth resistance, or rot resistance.

7. A method for manufacturing a layer system for use as an acoustic module, wherein (a) a fleece material is applied on at least a part of (b) a felt layer of wool felt and connected therewith in an edge region, wherein connecting is performed by welding such that the layer system comprises three-dimensionally rounded material edges.

8. The method according to claim 7, wherein the fleece material and the felt layer are as defined in any of claims 2 to 3.

9. The method according to any of claims 7 or 8, wherein the welding is high frequency welding.

10. The method according to any of claims 7 to 9, wherein the layer system is mounted in a frame.

11. Use of the layer system according to any of claims 1 to 6 as an acoustic module.

## Revendications

1. Système stratifié destiné à être utilisé dans un module acoustique, comprenant :
(a) un matériau non tissé et
(b) une couche de feutre constituée de feutre de laine qui est appliquée au moins partiellement sur le matériau non tissé et est reliée à celui-ci dans une zone de bordure,
dans lequel la liaison est effectuée par soudage de telle sorte que le système stratifié présente des bords de matériau arrondis tridimensionnellement.

2. Système stratifié selon la revendication 1, dans lequel le matériau non tissé comprend un non-tissé acoustique.

3. Système stratifié selon la revendication 2, dans lequel le non-tissé acoustique comprend un non-tissé acoustique résistant aux chocs et dimensionnellement stable.

4. Système stratifié selon l'une des revendications précédentes, dans lequel le soudage est effectué par soudage à haute fréquence.

5. Système stratifié selon l'une des revendications précédentes, lequel est monté dans un cadre.

6. Système stratifié selon l'une des revendications précédentes, dans lequel l'une des couches (a) ou (b) est pourvue d'au moins un apprêt permettant d'obtenir un effet ignifuge, un toucher plus dur, une plus grande résistance à la flexion, une résistance à la salissure, un effet hydrofuge/oléofuge, un effet anti-bactérien, une résistance aux mites ou une imputrescibilité.

7. Procédé de fabrication d'un système stratifié destiné à être utilisé comme module acoustique, selon lequel (a) un matériau non tissé est appliqué sur au moins une partie d'une couche de feutre constituée de feutre de laine (b) et est relié à celle-ci dans une zone de bordure, la liaison étant effectuée par soudage de telle sorte que le système stratifié présente des bords de matériau arrondis tridimensionnellement.

8. Procédé selon la revendication 7, selon lequel le matériau non tissé et la couche de feutre sont tels que définis dans l'une des revendications 2 à 3.

9. Procédé selon l'une des revendications 7 ou 8, selon lequel le soudage est un soudage à haute fréquence.

10. Procédé selon l'une des revendications 7 à 9, selon lequel le système stratifié est monté dans un cadre.

11. Utilisation du système stratifié selon l'une des revendications 1 à 6 comme module acoustique.
